Europäisches Patentamt

**European Patent Office**

Office européen des brevets

(19)

(11) Numéro de publication: **0 180 493**
**B1**

(12) ## FASCICULE DE BREVET EUROPEEN

(45) Date de publication du fascicule du brevet:
**09.03.88**

(51) Int. Cl.⁴: **G 03 B 37/00**, G 03 B 41/00

(21) Numéro de dépôt: **85401870.2**

(22) Date de dépôt: **25.09.85**

(54) Système de photographie des surfaces latérales d'échantillons solides.

(30) Priorité: **08.10.84 FR 8415376**

(43) Date de publication de la demande:
**07.05.86 Bulletin 86/19**

(45) Mention de la délivrance du brevet:
**09.03.88 Bulletin 88/10**

(84) Etats contractants désignés:
**DE GB IT NL**

(56) Documents cités:
**FR - A - 1 029 829**
**US - A - 3 373 440**

**THE BRITISH JOURNAL OF PHOTOGRAPHY, vol. 125,
no. 29, 21 juillet 1978, pages 626-628,636, Londres, GB;
I.C. CAMPSIE et al.: "Periphotography for irradiation
specimens"**

(73) Titulaire: **SOCIETE NATIONALE ELF AQUITAINE
(PRODUCTION), Tour Elf 2, Place de la Coupole La
Défense 6, F-92400 Courbevoie (FR)**

(72) Inventeur: **De Bazelaire, Eric, Lotissement les Sylvains
Chemin des Vignes, F-64140 Lons (FR)**

(74) Mandataire: **Levy, David et al, c/o S.A.
Fedit-Loriot 38, avenue Hoche, F-75008 Paris (FR)**

ACTORUM AG

## Description

La présente invention concerne un système de photographie des surfaces latérales d'échantillons solides prélevés notamment dans un milieu à explorer.

Lorsqu'on procède à l'exploration d'un milieu ou de façon plus large lorsqu'on souhaite accéder à la connaissance d'un milieu solide tel que le sous-sol terrestre, une des premières opérations à effectuer consiste en un prélèvement d'échantillons de ce milieu afin d'étudier un certain nombre de ses caractéristiques.

Dans le domaine de la recherche minière, et notamment pétrolière, les carottes prélevées mécaniquement par l'appareil de forage ont généralement la forme d'une colonne cylindrique. Ces carottes, à l'arrivée en surface et lors de leur extraction du dispositif de prélèvement appelé carottier, se fragmentent habituellement soit à cause d'une fissuration préexistante, soit du fait de brisures provoquées par le forage et la manutention, soit par la manifestation des tensions internes lors du changement de milieu. Le diamètre d'une carotte, déterminé par les caractéristiques du carottier, peut aller de quelques centimètres à quelques décimètres. Après nettoyage et dépoussiérage, les carottes font l'objet d'études approfondies par les structuralistes et les sédimentologistes en exploration et par les préposés en gisement en production, toutes les personnes concernées manipulant tour à tour les carottes ou prélevant chacune, un morceau qui subira tous les essais et/ou autres manipulations appropriés. Tous les travaux de recherche étant terminés, chaque carotte est ensuite entreposée dans une caisse, dûment référencée, puis stockée pendant de longues années car, bien souvent, on est amené à reprendre telle ou telle carotte soit pour affiner les travaux précédents soit pour de nouveaux travaux de recherche nécessités par un nouveau problème surgissant au cours de la production d'un puits de forage, par exemple. Le stockage des carottes dans leurs caisses immobilise de grands espaces et implique des moyens mécaniques importants pour la manipulation des caisses. De plus, quel que soit le soin apporté à la protection des carottes pendant leur stockage, il arrive parfois que certaines d'entre elles soient altérées ou dégradées et donnent en conséquence, des résultats erronés si d'autres travaux sont entrepris.

Une solution originale consiste alors à photographier les carottes mais de telle façon que les photographies puissent être utilisables par les diverses personnes concernées.

Depuis fort longtemps, on a cherché à mettre au point un système de photographie des objets de révolution, notamment à des fins d'études archéologiques. Le premier système conçu fut celui que l'on a dénommé «panoramique» et qui consistait à disposer l'objet à photographier dans une position donnée, puis à déplacer un appareil photographique autour dudit objet.

Une amélioration sensible fut apportée en supprimant la rotation de l'appareil photographique, l'objet à photographier restant devant l'objectif, et en la remplaçant par une rotation de l'objet lui-même.

Ainsi, comme dans un système panoramique, l'image de l'objet se fixait sur une pellicule photographique qui se déplaçait linéairement à la même vitesse de rotation de l'objet. Un tel système est connu aujourd'hui sous l'appellation de système de périphotographie.

Un autre système périphotographique est décrit dans le brevet FR 2 530 352; il comprend un chariot sur lequel sont montés un plateau rotatif support de l'objet à photographier, et un écran délimitant une fente de faible largeur s'étendant verticalement et situé à proximité de l'objet, un appareil photographique fixe ayant son objectif dirigé vers l'écran qui est interposé entre l'objectif et l'objet à photographier. Des moyens sont prévus pour entraîner en rotation le plateau à une vitesse uniforme, et pour déplacer le chariot linéairement à une vitesse uniforme synchronisée avec la vitesse de rotation du plateau, le sens de déplacement du chariot étant effectué de façon à être perpendiculaire à l'axe de visée de l'appareil photographique. Tant que les objets à photographier sont de petites dimensions et de faible poids, comme des vases, le dispositif décrit dans ce brevet convient parfaitement. Par contre, un tel dispositif ne convient pas pour des objets lourds et/ou de grandes dimensions, tels que des carottes mécaniques dont la longueur est égale ou supérieure à un mètre.

En effet, non seulement il serait nécessaire de prévoir un plateau et un chariot capables de supporter des dizaines de kilos, mais également des moyens annexes pour relier entre eux les morceaux de la carotte lorsque celle-ci est en plusieurs parties. Enfin, le fait de disposer la fente, entre l'objectif et l'objet et, plus précisément devant l'objet, nécessite de disposer d'une fente de grande longueur, au moins égale à celle de la plus grande génératrice de l'objet à photographier. Par ailleurs, même à supposer que les difficultés mentionnées seraient surmontées, la qualité des photographies obtenues à l'aide du système décrit dans le brevet, serait insuffisante sauf si on accepte de passer un temps relativement important à préparer l'état de surface de chaque carotte pour améliorer la qualité des photographies, et de prévoir les moyens en conséquence.

Enfin, dans le brevet US 3 373 440, il est décrit un système de photographie de carottes provenant de puits de forage.

Le système comprend une bande sans fin mobile sur laquelle est disposée la carotte, en un ou plusieurs morceaux, à photographier, l'avance de la carotte dans le champ de l'appareil photographique étant égale au déplacement du film. Les photographies obtenues sont des vues de dessus des parties de cylindre de la carotte admise dans le champ de vision. En fait, il s'agit de simples photographies de carottes se d'éplaçant devant un objectif fixe. Pour avoir une photographie complète de la surface latérale de la carotte, il faudrait faire défiler la carotte devant l'objectif autant de fois qu'il y aura de sections à photographier, ce qui nécessite de multiples mises en place de la carotte ou des morceaux de carotte sur la bande transporteuse.

La présente invention a pour objet un système de photographie des surfaces latérales d'une carotte, qui soit automatisé, de fonctionnement simple, fiable et adapté à une grande variété de dimensions.

Un autre objet de la présente invention est de pouvoir photographier des objets sans nécessiter une étape préalable de préparation d'état de surfaces.

La présente invention qui est du type comportant un support de l'échantillon à photographier, des moyens pour entraîner en rotation le support et l'échantillon, un dispositif photographique fixe dont le film sensible est déplacé à une vitesse linéaire en synchronisme avec la vitesse de rotation de l'échantillon et des moyens d'éclairement dudit échantillon est caractérisé en ce qu'il comprend, en outre, des moyens d'humidification de l'échantillon et des moyens pour former une mince pellicule fluide sur toute la surface latérale dudit échantillon pendant la photographie de ladite surface latérale.

D'autres caractéristiques apparaîtrons à la lecture de la description d'un mode de réalisation de l'invention, donné à titre indicatif mais non limitatif, et des dessins sur lequels:

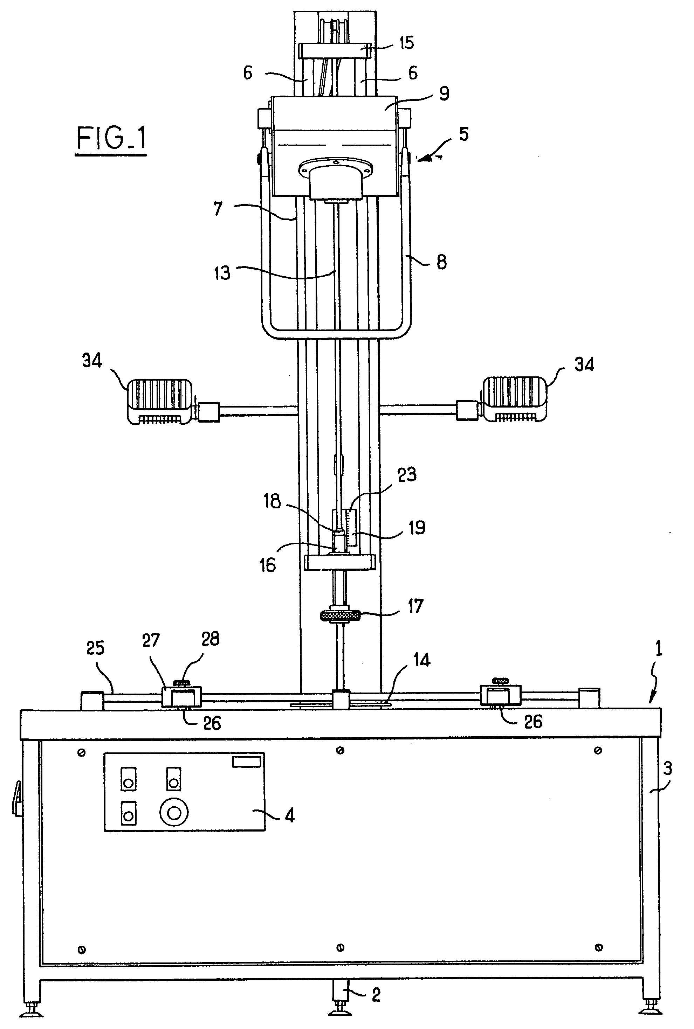

La figure 1 est une vue de face du dispositif selon l'invention.

La figure 2 est une vue de côté du dispositif représenté sur la figure 1.

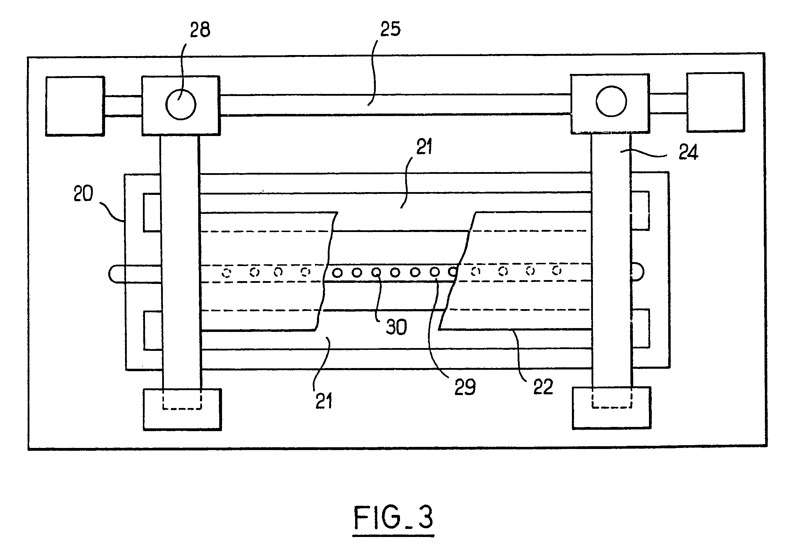

La figure 3 est une vue partielle de dessus de la table du dispositif représenté sur la figure 1.

La figure 4 est une vue en coupe du système photographique du dispositif selon l'invention.

Le système comprend une table 1 constitué par un châssis 3 monté sur quatre pieds 2 réglables en hauteur. Sur la face de la table 1 est monté un pupitre de commande 4 des mouvements des différentes parties du dispositif qui sont décrites ci-après.

Un dispositif photographique, désigné dans son ensemble par la référence 5, se déplace verticalement par rapport au plan de la table 1 le long de rails de déplacement 6 qui sont prévus sur un portique 7 monté verticalement sur le châssis 3. Le déplacement du dispositif photographique 5 est effectué au moyen d'un organe de préhension et de manipulation 8 qui est solidaire d'un carter de protection 9 dudit dispositif et qui se présente sous la forme d'une barre en U renversé. Un contre-poids 10 est logé dans le portique 7 et relié à un élément du carter 9 par un câble 11 s'enroulant sur une poule 12, ledit contre-poids étant légèrement plus lourd que le dispositif photographique 5.

Une tige verticale 13, de longueur constante est réunie par son extrémité inférieure à une tablette de référence 14 et, par son extrémité supérieure, à une butée de mise au point 15. Une vis 16 commandée en déplacement par une molette 17 comprend un repère 18 qui se déplace le long d'un index gradué 19 qui est codé en fonction des diamètres des carottes à photographier. La fonction de ces différents organes sera précisée à propos du fonctionnement.

Une cuve à eau 20, ouverte sur la face supérieure, est montée dans le châssis 3 de la table et comprend une longueur supérieure à la longueur la plus grande de la carotte à photographier. Dans la cuve 20 sont montés dans un même plan, deux rouleaux de support 21, en caoutchouc et dont l'état de surface correspond à celui des rouleaux encreurs utilisés dans l'imprimerie. L'écartement et le diamètre des rouleaux 21 est défini pour recevoir en appui, une carotte 22 dont le diamètre peut varier entre quelques centimètres à quelques décimètres. Les différents diamètres de la carotte 22 sont codés sur l'index 19 dont chaque graduation 23 correspond à un diamètre précis d'une carotte. La carotte 22 qui peut être en un mais le plus souvent en plusieurs morceaux, accolés les uns aux autres, est maintenue latéralement compressée, pour éviter un mouvement relatif entre les morceaux, par deux barres de maintien et de compression 24 qui sont susceptibles d'être déplacées par une de leurs extrémités le long d'une tige horizontale 25 fixée sur le plan supérieur de la table 1 et parallèlement à l'axe horizontal des rouleaux 21, chacune des autres extrémités des barres 24 étant pourvues d'une roulette 26, le déplacement desdites barres de maintien 24 étant effectué au moyen de petits blocs de manutention creux 27 coulissant sur la barre 25 et pourvus chacun d'une molette 28 dont le serrage immobilise les blocs 27 et, par suite, les barres 24 dans une position déterminée sur la tige 25. Ainsi, la carotte 22 pourra tourner librement sans pour autant avoir la possibilité de se déplacer latéralement et permettre une éventuelle séparation des morceaux de carotte entre eux. Des moyens humidificateurs sont prévus dans la cuve 20 et sont constitués par une conduite 29 comprenant des fines buses de pulvérisation 30 réparties régulièrement sur toute la longueur de ladite conduite et dont l'inclinaison est telle qu'elle permet de mouiller la carotte 22 sans produire des éclaboussures à l'extérieur de la cuve 20. La conduite 29 montée au-dessous des axes longitudinaux des rouleaux 21 est alimentée, par une extrémité, à partir d'une source de fluide non représentée, par, en l'occurrence, de l'eau légèrement sous pression qui est évacuée par l'autre extrémité, hors de ladite cuve. La pulvérisation d'eau sur la carotte combinée à l'action des rouleaux 21 permet de réaliser, sur ladite carotte, un mince film d'eau dont l'importance est assez considérable. En effet, la projection d'eau sous pression permet non seulement de nettoyer la paroi latérale de la carotte mais également de boucher les petits orifices qui apparaissent toujours sur la paroi de la carotte, de manière à uniformer la surface de la carotte et de conférer à cette dernière un état de surface le plus net possible afin d'assurer les meilleures photographies possibles. L'eau qui est projetée sur la carotte 22 est mise sous la forme d'une mince pellicule par les rouleaux «encreurs» 21, la formation et l'épaisseur du film mince d'eau étant maintenues constantes par la rotation des rouleaux 21, ladite rotation étant assurée par un moteur synchrone 31 et une courroie crantée 32 passant sur des poulies appropriées 33 montées sur les axes des rouleaux 21. La présence constante, pendant toute la photographie de la carotte 22, de la mince pellicule d'eau permet d'augmenter l'albedo de la carotte ou la réflectivité de la surface de la carotte, l'albedo étant le rapport de l'émissivité d'un corps sur celle du corps noir équivalent. L'augmentation de la réflectivité de la surface entraîne une augmentation du contraste des détails de la surface de la carotte et par suite, d'obtenir un meilleur enregistrement puisque pour le système photographie la surface de la carotte est équivalente à une surface polie.

L'éclairage de la carotte 22 à photographier est assuré par deux lampes orientables 34 montées sur deux bras supports qui sont solidaires du portique 7. De préférence, les lampes 34 sont orientées de façon à produire des faisceaux lumineux qui tombent à 45° sur la carotte 22 de manière à éviter que la réflexion spéculaire ne rentre dans le champ d'une fente 35 qui est prévue dans le système photographique 5.

Dans le carter de projection 9 est prévue une paroi de séparation 36 qui divise l'intérieur en deux enceintes 37 et 38.

Dans l'enceinte 37 est disposé un appareil photographique 39 classique mais approprié pour la photographie de surface de carotte, du type de celui commercialisé par la «Sté LINHOFF».

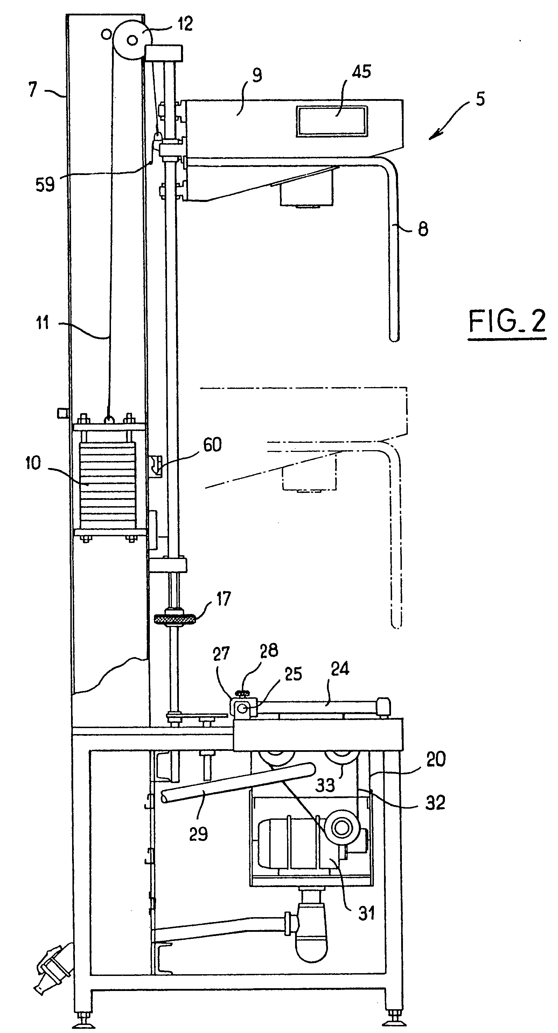

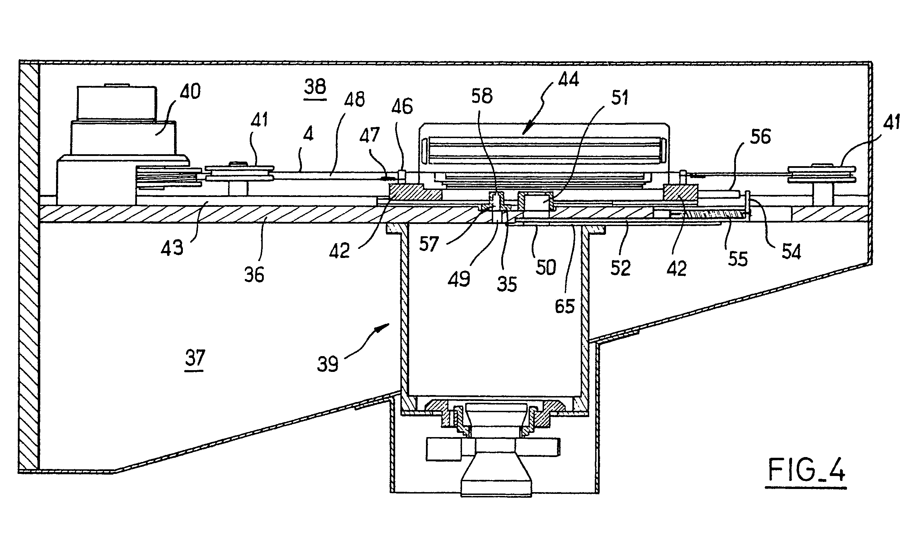

Dans l'enceinte 38 sont disposés, fixés sur la paroi 36, un moteur synchrone 40 et quatre poulies de renvoi 41 dont deux seulement sont représentées sur la figure 4. Un chariot 42 se déplace sur des chemins de roulement 43 fixés sur la paroi 36 et reçoit une plaque photographique ou un plan film, désigné dans son ensemble par la référence 44 qui est également standard et qu'on trouve dans le commerce, ladite plaque photographique étant introduite dans le carter 9 et mise en place sur le chariot 42, à travers une trappe 45 ménagée dans une face du carter 9 (figure 2). Le chariot 42 comprend deux têtons d'accrochage 46 de petits ressorts de tension 47 auxquels sont fixées les extrémités d'un câble 48 de déplacement dudit chariot 42 et s'enroulant sur les poulies 41. Deux orifices 49 et 50 sont ménagés sur la paroi 36 et en regard desquels sont prévues la fente 35 et une fenêtre de première pose 51, respectivement. Un cache amovible 52 coulisse dans une rainure appropriée 65 ménagée dans la paroi 36 et comprend un rebord vertical 54 qui est sollicité vers la position d'obturation par un ressort de rappel 55 fixé sur un élément de la paroi 36. Deux poussoirs 56 sont solidaires du chariot 42 et peuvent prendre appui, lors d'un déplacement vers la droite sur la figure 4, sur le rebord 54 de manière à amener le cache 52 dans la position d'ouverture et dégager ainsi la fenêtre de première pose 51.

La fente 35, plus petite que la fenêtre, présente une partie plus large 57 et une partie plus étroite 58, et elle est disposée légèrement en avant du plan image de l'appareil photographique 39. La partie 58, lorsqu'elle est vue en coupe perpendiculairement à celle représentée sur la figure 4, comporte une partie divergente et une partie convergente qui ne sont pas représentées. La fente 35 a pour fonction de rendre homogène l'éclairement du plan du film photographique de la plaque 44 et d'obtenir un éclairement constant le long de l'image de la génératrice de la carotte photographiée. Ainsi la même quantité d'énergie lumineuse est obtenue le long de la génératrice et permet une digitalisation ultérieure de l'image. Ceci est important car il est nécessaire de compenser, dans le plan image, la variation latérale d'éclairement due d'une part, à la non homogénéité d'éclairement de la génératrice de la carotte et, d'autre part, à l'atténuation introduite par l'objectif de l'appareil 39, en fonction de l'angle du champ.

Le fonctionnement du système selon l'invention est le suivant:

Les morceaux de carotte ou la carotte elle-même lorsqu'elle est d'un seul tenant, sont disposés sur les rouleaux 21 de manière à constituer une carotte 22, puis on bloque latéralement ladite carotte 22 au moyen des barres 24. Le diamètre de la carotte 22 ayant été préalablement mesuré, on actionne manuellement la molette 17 de manière à amener le repère 18 devant la graduation 23 de l'index 19 qui correspond au diamètre de la carotte 22 à photographier. L'actionnement de la molette 17 déplace en conséquence la tige 13, qui est de longueur constante et, par suite, la butée de mise au point 15 de la tablette de référence 14 qui lui sont solidaires. Le dispositif 5 est amené ensuite en position basse, représentée en pointillés sur la figure 2, le maintien, dans cette position basse, étant obtenu par encliquetage d'un cliquet 59 s'engageant dans un organe de verrouillage 60 monté sur le portique 7, et la plaque photographique 44 est mise en place sur le chariot 42. Après cette phase de réglage et de chargement de plaque, le moteur 31 est actionné de façon à préparer l'état de surface de la carotte 22 par formation du film mince d'eau. Le déverrouillage du dispositif 5 est opéré par traction vers le bas de la barre 8 ce qui libère le cliquet 59 de l'organe de verrouillage 60. Le dispositif 5, en raison du contrepoids plus lourd 10, se déplace sans aide extérieure vers le haut jusqu'à venir en appui sur la butée 15. La mise au point de l'objectif de l'appareil photographique est, de ce fait, automatiquement réalisée non seulement sur la plaque de référence 14, mais également sur la carotte 22, grâce au positionnement adéquat de ladite butée 15 rappelée précédemment. La mise au point automatique de l'objectif permet d'obtenir une image plus nette du sommet de la carotte 22 quel que soit son diamètre. La première pose est alors effectuée pour photographier la plaque de référence 14, en actionnant le moteur 40 de façon à déplacer le chariot 42 vers la droite sur la figure 4, ce déplacement ayant pour effet de déplacer le cache 52 également vers la droite par appui des poussoirs 56 sur le rebord 54. La fenêtre 51 étant dégagée, l'ouverture du diaphragme de l'appareil photographique 39 est opérée, au 125 de seconde par exemple. La première pose étant terminée, le moteur 40 est commandé en sens inverse pour déplacer le chariot 42 vers la gauche. La cache 52 n'étant plus repoussé par les poussoirs 56 et sollicité par le ressort de rappel 55, revient dans la position d'obturation de la fenêtre 51. Les deux moteurs 40 et 31 sont entraînés en synchronisme de telle façon que la vitesse linéaire du chariot 42 soit égale à la vitesse de rotation des rouleaux 21 et, donc de la vitesse de rotation de la carotte 22 qui tourne sur elle-même sans glissement. Pendant que la plaque 44 se translate dans son plan devant la fente fixe 35, l'objectif de l'appareil photographique 39 forme l'image d'une génératrice de la carotte 22 sur ladite fente 35 qui est centrée sur l'axe optique et disposée parallèlement à la génératrice de la carotte photographiée. Bien entendu, le choix de la vitesse de rotation de la carotte 22 dépend de l'ouverture numérique de l'objectif et de l'éclairement, le dispositif selon l'invention permet de travailler à l'intensité d'éclairement constant et à ouverture numérique variable. De même, l'objectif inversant l'image dans le sens de la fente fixe, le choix du sens de rotation par rapport à la direction de la transmission du chariot 42 doit être déterminé de manière à inverser également l'image dans le sens perpendiculaire à la fente fixe.

Par ailleurs, le déplacement de la plaque 44 est déterminé de façon que la carotte 22 soit photographiée sur un tour et demi, ce qui permet de minimiser la prépondérance de la génératrice d'origine et, lors de la digitalisation ultériere, d'éliminer les effets de bord.

Bien évidemment, le système comprend une circuiterie électrique qui permet de réaliser les différentes séquences et les sécurités nécessaires, circuiterie qui n'a pas été décrite pour être connue de l'homme de l'art. Egalement, ne sont pas représentées les diverses butées réglables ou non qui limitent le déplacement du chariot 42 sur les rails 43.

## Revendications

1. Système de photographie des surfaces latérales d'échantillons solides, du type comprenant un support (21) de l'échantillon à photographier (22), des moyens (31, 40) pour entraîner en rotation le support (21) et l'échantillon (22), un dispositif photographique (5) fixe dont le film sensible (44) est déplacé à une vitesse linéaire en synchronisme avec la vitesse de rotation de l'échantillon, et des moyens d'éclairement (34) dudit échantillon, caractérisé en ce qu'il comprend, en outre, des moyens d'humidification (29, 30) de l'échantillon (22) et des moyens (21) pour former une mince pellicule de fluide sur toute la surface latérale dudit échantillon pendant la photographie de ladite surface latérale.

2. Système selon la revendication 1, caractérisé en ce que la mince pellicule de fluide est maintenue constante en épaisseur pendant la photographie de la surface latérale.

3. Système selon les revendications 1 ou 2, caractérisé en ce que les moyens d'humidification sont constitués par une conduite (29) munie d'orifices (30) de pulvérisation de fluide.

4. Système selon les revendications 1 ou 2, caractérisé en ce que les moyens pour former une mince pellicule de fluide sont constitués par deux au moins rouleaux légèrement souples (21), disposés dans un même plan horizontal et sur lesquels repose l'échantillon (22) à photographier.

5. Système selon les revendications 3 et 4, caractérisé en ce que la conduite (29) est disposée au-dessus et entre lesdites rouleaux (21), de préférence au-dessous des axes longitudinaux desdits rouleaux.

6. Système selon les revendications 5 ou 6, caractérisé en ce que les rouleaux sont entraînés à une vitesse de rotation constante au moyen d'un moteur synchrone (31).

7. Système selon la revendication 1, caractérisé en ce qu'il comprend des moyens de mise au point automatique du dispositif photographique, lesdits moyens étant constitués par un asservissement (13, 15, 17, 18, 19, 23) du positionnement du dispositif photographique (5) en fonction du diamètre de l'échantillon (22) à photographier.

8. Système selon les revendications 1 ou 7 caractérisé en ce que dans le plan image du dispositif photographique est disposée une fente fixe (35).

9. Système selon la revendication 8, caractérisé en ce que la fente fixe comprend au moins deux parties (57, 58) de largeur différente.

10. Système selon l'une des revendications 1, 7 à 9, caractérisé en ce qu'il comprend une fenêtre fixe (51) de première exposition disposée dans le plan image du dispositif photographique (5).

11. Système selon la revendication 1, caractérisé en ce que le dispositif photographique (5) comprend un chariot (42) mobile qui supporte le film sensible (44), ledit chariot étant monté sur une cloison de support (36) et déplacé linéairement à une vitesse égale à la vitesse de rotation des rouleaux (21).

12. Système selon les revendications 8 à 10, caractérisé en ce que la fente (35) et la fenêtre de première exposition (51) sont prévues sur la cloison support (36) qui comprend des ouvertures (49, 50) ménagées en regard desdites fente et fenêtre.

13. Système selon la revendication 7, caractérisé en ce que les moyens de mise au point automatisée sont constitués par une tige (13) de longueur constante susceptible d'être déplacée dans un même plan, ladite tige (13) comprenant d'une part à une extrémité une butée d'arrêt (15) pour le dispositif photographique (5), et, à son autre extrémité, une plaque de référence (14) et, d'autre part, un repère (18) prévu entre lesdites butée (15) et plaque (14) et se déplaçant devant un index gradué fixe (19) dont chaque graduation (23) correspond à un diamètre prédéterminé de l'échantillon à photographier.

14. Système selon l'une des revendications précédentes caractérisé en ce qu'il comprend des moyens (24) de compression latérale de l'échantillon (22), lesdits moyens étant constitués par deux barres (24) susceptibles de coulisser par une de leurs extrémités le long d'une barre fixe et parallèle aux rouleaux de support (21).

15. Système selon la revendication 1, caractérisé en ce qu'il comprend un portique vertical (7) sur lequel se déplace le dispositif photographique (5) qui est équilibré par un contre-poids (10) dont le poids est légèrement supérieur à celui dudit dispositif photographique (5).

16. Système selon la revendication 15, caractérisé en ce que des moyens de verrouillage (59, 60) sont prévus pour verrouiller le dispositif photographique (5) en position basse.

17. Système selon la revendication 1, caractérisé en ce que les moyens d'éclairement produisent deux faisceaux lumineux tombant à 45° sur l'échantillon à photographier.

18. Système selon l'une des revendications précédentes, caractérisé en ce que le dispositif photographique (5) comprend des moyens de manutention (8) pour le déplacer par rapport à l'échantillon (22).

19. Système selon l'une des revendications 1 à 18, caractérisé en ce que l'échantillon (22) est une carotte en un ou plusieurs morceaux et provenant d'un prélèvement dans un trou foré.

20. Système selon l'une des revendications précédentes, caractérisé en ce qu'il comprend un cache (52) amovible obturant la fenêtre (51) lors de la photographie de l'échantillon (22).

**Patentansprüche**

1. System zum Fotografieren der Seitenflächen von festen Proben, aufweisend einen Träger (21) für die zu fotografierende Probe (22), eine Einrichtung (31, 40), um den Träger (21) und die Probe (22) in Drehung zu versetzen, einen feststehenden fotografischen Apparat (5), dessen lichtempfindlicher Film (44) mit einer linearen Geschwindigkeit synchron zur Drehgeschwindigkeit der Probe verschoben wird, und eine Einrichtung (34) zur Beleuchtung der Probe, dadurch gekennzeichnet, dass es ausserdem eine Einrichtung (29, 30) zur Befeuchtung der Probe (22) und eine Einrichtung (21) zur Bildung eines feinen Flüssigkeitsfilms auf der gesamten Seitenfläche der genannten Probe während des Fotografierens dieser Seitenfläche aufweist.

2. System nach Anspruch 1, dadurch gekennzeichnet, dass während des Fotografierens der Seitenfläche die Dicke des feinen Flüssigkeitsfilms konstant gehalten wird.

3. System nach Anspruch 1 oder 2, dadurch gekennzeichnet, dass die Einrichtung zur Befeuchtung aus einer Rohrleitung (29) besteht, die mit Öffnungen (30) zum Zerstäuben von Flüssigkeiten versehen ist.

4. System nach Anspruch 1 oder 2, dadurch gekennzeichnet, dass die Einrichtung zur Bildung eines feinen Flüssigkeitsfilms aus wenigstens zwei Walzen geringer Geschmeidigkeit (21) besteht, die in derselben horizontalen Ebene angeordnet sind, und auf denen die zu fotografierende Probe liegt.

5. System nach den Ansprüchen 3 und 4, dadurch gekennzeichnet, dass die Rohrleitung (29) unter und zwischen den genannten Walzen (21) angeordnet ist, vorzugsweise unter den Längsachsen der Walzen.

6. System nach Anspruch 4 oder 5, dadurch gekennzeichnet, dass die Walzen mittels eines Synchronmotors (31) in eine konstante Drehgeschwindigkeit versetzt werden.

7. System nach Anspruch 1, dadurch gekennzeichnet, dass es eine Einrichtung zur automatischen Einstellung des fotografischen Apparates aufweist, wobei die genannte Einrichtung aus einem Servomechanismus (13, 15, 17, 18, 19, 23) zur Einstellung der Lage des fotografischen Apparates (5) in Abhängigkeit vom Durchmesser der zu fotografierenden Probe aufgebaut ist.

8. System nach den Ansprüchen 1 oder 7, dadurch gekennzeichnet, dass in der Bildebene des fotografischen Apparates ein feststehender Schlitz (35) angeordnet ist.

9. System nach Anspruch 8, dadurch gekennzeichnet, dass der feststehende Schlitz wenigstens zwei Teile (57, 58) verschiedener Breite aufweist.

10. System nach einem der Ansprüche 1, 7 bis 9, dadurch gekennzeichnet, dass es ein feststehendes Fenster (51) zur Erstbelichtung aufweist, das in der Bildebene des fotografischen Apparates (5) angeordnet ist.

11. System nach Anspruch 1, dadurch gekennzeichnet, dass der fotografische Apparat (5) einen beweglichen Schlitten (42) aufweist, der den lichtempfindlichen Film (44) trägt, wobei der genannte Schlitten auf eine Trägerplatte (36) montiert ist und linear mit einer Geschwindigkeit verschoben wird, die gleich der Drehgeschwindigkeit der Walzen (21) ist.

12. System nach den Ansprüchen 8 bis 10, dadurch gekennzeichnet, dass der Schlitz (35) und das Fenster zur Erstbelichtung (51) auf der Trägerplatte (36) vorgesehen sind, die Öffnungen (49, 50) aufweist, die gegenüber dem Schlitz und dem Fenster ausgespart sind.

13. System nach Anspruch 7, dadurch gekennzeichnet, dass die Einrichtung zur automatischen Einstellung aus einer Stange (13) konstanter Länge besteht, die in derselben Ebene verschoben werden kann, wobei genannte Stange (13) einerseits an ihrem einen Ende einen Arretieranschlag (15) für den fotografischen Apparat (5) und an ihrem anderen Ende eine Bezugsplatte (14) und andererseits eine Markierung (18) aufweist, die zwischen dem Anschlag (15) und der Platte (14) vorgesehen ist, und die sich vor einer feststehenden Messskala (19) bewegt, deren Gradeinteilung (23) jeweils einem vorgegebenen Durchmesser der zu fotografierenden Probe entspricht.

14. System nach einem der vorhergehenden Ansprüche, dadurch gekennzeichnet, dass es eine Einrichtung (24) aufweist, um die Probe (22) seitlich zusammenzudrücken, wobei die genannte Einrichtung aus zwei Stäben (24) besteht, die an einem ihrer Enden entlang eines feststehenden Stabes gleiten können, der parallel zu den Trägerwalzen (21) liegt.

15. System nach Anspruch 1, dadurch gekennzeichnet, dass es eine vertikale Bühne (7) aufweist, auf der sich der fotografische Apparat (5) verschiebt, der durch ein Gegengewicht (10), dessen Gewicht geringfügig höher ist als das des fotografischen Apparats (5), im Gleichgewicht gehalten wird.

16. System nach Anspruch 15, dadurch gekennzeichnet, das eine Verriegelungseinrichtung (59, 60) vorgesehen ist, um den fotografischen Apparat in abgesenkter Stellung zu verriegeln.

17. System nach Anspruch 1, dadurch gekennzeichnet, dass die Beleuchtungseinrichtung zwei Lichtkegel erzeugt, die in einem Winkel von 45° auf die zu fotografierende Probe einfallen.

18. System nach einem der vorhergehenden Ansprüche, dadurch gekennzeichnet, dass der fotografische Apparat (5) eine Handhabungsvorrichtung (8) aufweist, um ihn bezüglich der Probe (22) zu verschieben.

19. System nach einem der Ansprüche 1 bis 18, dadurch gekennzeichnet, dass die Probe (22) ein Bohrkern ist, der aus einem oder mehreren Stücken besteht und aus einer Entnahme aus einem Bohrloch stammt.

20. System nach einem der vorhergehenden Ansprüche, dadurch gekennzeichnet, dass es eine abnehmbare Abdeckung (52) aufweist, die das Fenster (51) beim Fotografieren der Probe (22) verschliesst.

**Claims**

1. System for photographing lateral surfaces of solid samples of the type incorporating a support (21) for the sample to be photographed (22), means (31, 40) for rotating support (21) and sample (22), a fixed camera (5), whose sensitive film (44) is displaced at a linear speed synchronized with the rotation speed of the sample and means (34) for illuminating said sample, characterized in that it also comprises means (29, 30) for humidifying sample (22) and means (21) for forming a thin fluid film over the entire lateral surface of said sample during the photography of said surface.

2. System according to claim 1, characterized in that the thin fluid film is kept at constant thickness during the photography of the lateral surface.

3. System according to claim 1 or 2, characterized in that the humidifying means are constituted with a pipe (29) having orifices (30) for atomizing the fluid.

4. System according to claim 1 or 2, characterized in that the means for forming a thin fluid film are constituted by at least two slightly flexible rollers (21) disposed in the same horizontal plane and on which rests the sample (22) to be photographed.

5. System according to claims 3 and 4, characterized in that pipe (29) is positioned below and between said rollers (21), preferably below the longitudinal spindles of said rollers.

6. System according to claims 5 or 6, characterized in that the rollers are driven at a constant rotation speed by means of a synchronous motor (31).

7. System according to claim 1, characterized in that it comprises means for the automatic focusing of the camera, said means being constituted by a servocontrol (13, 15, 17, 18, 19, 23) of the positioning of the camera (5) as a function of the diameter of sample (22) to be photographed.

8. System according to claim 1 or 7, characterized in that a fixed slit (35) is located in the image plane of the camera.

9. System according to claim 8, characterized in that the fixed slit has at least two parts (57, 58) of different widths.

10. System according to any one of the claims 1 and 7 to 9, characterized in that it comprises a fixed first exposure window (51) located in the image plane of camera (5).

11. System according to claim 1, characterized in that the camera (5) comprises a mobile carriage (42) supporting the sensitive film (44), said carriage being mounted on a support partition (36) and displaced linearly at a speed equal to the rotation speed of the rollers (21).

12. System according to claim 8 to 10, characterized in that slit (35) and first exposure window (51) are located on partition (36) having openings (49, 50) made facing said slit and said window.

13. System according to claim 7, characterized in that the automatic focusing means are constituted by a rod (13) of constant length which can be displaced in the same plane, said rod (13) having at its one end a stop (15) for the camera (5) and at its other end a reference plate (14) whilst a reference mark (18) is provided between said stop (15) and said plate (14) and which moves in front of a fixed graduated index (19), whereof each graduation (23) corresponds to a predetermined diameter of the sample to be photographed.

14. System according to any one of the preceding claims, characterized in that it comprises means (24) for laterally compressing sample (22), said means being constituted by two bars (24) which can slide by one of their ends along a fixed bar parallel to the support rollers (21).

15. System according to claim 1, characterized in that it comprises a vertical gantry (7), on which travels the camera (5), which is balanced by a counterweight (10), whose weight slightly exceeds that of the camera (5).

16. System according to claim 15, characterized in that locking means (59, 60) are provided for locking the camera (5) in the bottom position.

17. System according to claim 1, characterized in that the illuminating means produce two light beams striking the sample to be photographed at 45°.

18. System according to any one of the preceding claims, characterized in that the camera (5) comprises handling means (8) for displacing it with respect to sample (22).

19. System according to one of the claims 1 to 18, characterized in that the sample (22) is a core sample in one or several fragments and coming from a sampling operation in a drilled hole.

20. System according to any one of the preceding claims, characterized in that it comprises a detachable cover (52) closing window (51) during the photography of sample (22).

FIG.1

FIG. 2

FIG_3

FIG_4